Europäisches Patentamt

**European Patent Office**

**Office européen des brevets**

(11) Publication number: **0 338 643**

A1

## (12) EUROPEAN PATENT APPLICATION

(21) Application number: **89200989.5**

(22) Date of filing: **18.04.89**

(51) Int. Cl.⁴: **F16H 19/00 , B23Q 7/05 , B23K 37/04**

(30) Priority: **19.04.88 NL 8801006**

(43) Date of publication of application:
**25.10.89 Bulletin 89/43**

(84) Designated Contracting States:
**AT BE CH DE ES FR GB GR IT LI LU NL SE**

(71) Applicant: **DE HAAN MECHATRONICS B.V.**
**Schoolkade 93**
**NL-9581 HE Musselkanaal(NL)**

(72) Inventor: **Rosenthal, Dov**
**Rishon le Zion Street 23**
**IL-275 Tel Aviv 42(IL)**

(74) Representative: **de Bruijn, Leendert C.**
**Nederlandsch Octrooibureau**
**Scheveningseweg 82 P.O. Box 29720**
**NL-2502 LS 's-Gravenhage(NL)**

(54) **Tube drive robot.**

(57) A device for the rotating or axially moving displacement of tubes or rods during the performance of processes thereon has two sets of planetary wheels (33, 34) one to the side of the other, the wheels of both sets having axes inclined with respect to a plane perpendicular to the axis, so that the wheels of one set are inclined thereto oppositely to the wheels of the other set. The wheels (33, 34) engage the tubes or rods by friction and are freely rotatable about their own axes. The sets can be kept stationary or be rotated by drive means with the same or different speeds and even in mutually opposite directions to give a desired rotation, axial displacement or combination of both to the tubes or rods. The wheels (34) may be journalled in parts (35), which can move radially to adapt to tubes or rods of considerably differing outer diameters.

Fig - 5

# TUBE DRIVE ROBOT

The present invention relates to a device for the rotating or axially moving displacement of tubes or rods during the performance of processes thereon.

Such devices are known. They are used to perform diverse operations on the tube or rod. In this process, the surface thereof is moved along a required path past a permanently installed processing device. This may involve flame cutting, removal of surface layers, slotting and the like. An example of the first-named application is the shortening, by flame cutting, of the end of a tube which has to be securely welded obliquely to another tube, for example to produce a framework structure such as a crane jib. In this process, the shortened tube end has to be so shaped that it makes contact at that point in accordance with the curvature of the other tube. With the said devices, this can be achieved by choosing the required position in the direction of rotation for any axial position of the tube to be shortened.

For this purpose, the known device has a separate drive mechanism for the axial movement and also a separate drive mechanism for the rotating movement. This has the result that the device is bulky and expensive. In addition, the structure has to be sufficiently rigid in order to be able to maintain the required dimensional accuracy, and this leads to problems particularly in the case of devices for processing fairly large tubes.

The object of the invention is therefore to provide a device of the type mentioned in the introduction which is simpler, less bulky and nevertheless has a sufficiently rigid structure.

This is achieved in that two planetary systems are provided next to each other on the same axis in a manner such that they can both simultaneously make contact with the circumference of a tube or rod to be processed with its axis in said axis, in that both systems have planetary wheels rotating around their axis constructed as friction rollers for making frictional contact with the circumference of the tube or rod, the axes of the planetary wheels of the one system sloping in one direction and those of the wheels of the one system sloping in one direction and those of the other system sloping in the opposite direction with respect to a plane perpendicular to said common axis, each system having drive means for rotation around said common axis and the drive means of at least one system being so constructed that they can, if desired, hold the system stationary or can rotate it with variable speed even in the opposite direction to that of the other system.

The two systems of planetary wheels form a stable support for the tube or rod to be processed. Depending on the slope of the axes of the planetary wheels of both systems, when the systems rotate around their common axis, a certain rotating and/or axial movement of the supported tube is obtained.

It is pointed out that it is known per se to displace tubes or rods in a rotating and axially moving manner by frictionally making contact therewith from the outside with planetary wheels.

From EP-A-0,001,007, it is known to give the rod or tube an axial movement by a relative rotating movement of the planetary wheel holder and the rod or tube with respect to each other with frictional planetary wheels, all in the same angular position with the rod or tube or to give it a rotating movement by a relative axial movement.

From BE-A-694,491, it is known to insert the tube or rod through a central axial cavity of the rotor of an electric motor in which the stator as well as the rotor has planetary wheels which are able to make frictional contact with the rod or tube. The angular position of the one set of wheels is different from that of the other and the angular position of one of the sets of wheels may be adjustable so that an axial or a helical movement can be imparted to the rod or tube by the rotating movement of the rotor of the electric motor.

It is further pointed out that it is known to move a tubular carrier for work pieces axially and in a rotating manner by providing the carrier with left-hand and right-hand thread and engaging these with drivable nuts having opposite directions of rotation.

The slope of the axes of the planetary wheels can be chosen as desired and may also differ between both systems; preferably, planetary wheels is 45°.

If both systems of planetary wheels rotate at the same speed in the same direction, the enclosed tube rotates with corresponding speed and direction without axial displacement:

$$W_s = \frac{W_2 - W_1}{2},$$

where $W_s$ is the angular velocity of the tube or rod and $W_1$ and $W_2$ are respectively the angular velocities of the planetary wheel systems. If, on the other hand, both systems of planetary wheels rotate with the same speed in opposite directions, the tube is not rotated but is displaced in the axial direction with a speed equal to half the difference in the rotary speeds of the systems of planetary wheels multiplied by the pitch of a helical line extending over the tube, in the preferred embodiment, with a pitch angle of 45°:

$$T_s = \frac{W_1 - W_2}{2} \times P,$$

where $T_s$ is the axial speed of a tube or rod and P is the pitch. In addition, by varying the rotary speeds of the systems of planetary wheels, any desired combination of rotating and axial movements or speeds can be obtained.

The most preferable way to rotatingly drive the planetary systems is to embody the device so that the planetary wheels are accommodated in separate carriers which are rotatable around the axis and which are each enclosed between two opposite thrust rings which can be moved towards each other and can make contact non-rotatably with each other and with the carrier situated between them, one of which thrust rings is connected to the rotational drive means.

The robot can be so constructed that each system of planetary wheels comprises at least two rollers. If two rollers are used per planetary wheel system, the required contact forces and friction forces can be developed on the tube. If more rollers are provided, these can be increased still further, and this is beneficial in obtaining higher processing rates.

As already stated, the planetary wheels interact frictionally with the tube. Therewith the friction has to be so great that any form of slipping during the rolling movement of the planetary wheels over the tube is avoided. According to the invention, this can be achieved in that each system of planetary wheels is carried by a ring comprising two half rings, each half of which supports one or more planetary wheels, and having means for forcing the two half rings towards each other.

Using three planetary wheels per set ensures that the tube cannot deviate radially, so that this is preferred. In the case of such half rings, in which the planetary wheels are suspended forcing the half rings towards each other achieves the result that they rest against the tube with a virtually constant force. Small irregularities in, or deviations from, the circular form of the tube can thereby be absorbed without slip occurring. In addition, when a tube to be processed is inserted, the half rings can be forced apart to allow the tube through until it finds the required position in the device.

Each half ring can also be provided with three rollers which are fitted so as to be distributed regularly in the circumferential direction and which are alternately situated on either side of the ring centre plane perpendicular to the ring centre line. In this embodiment, the half rings each rest by means of three rollers on the tube, as a result of which a very stable and self-centring support is provided.

To simplify the construction, provision may be made that in each case one of the said thrust rings for a planetary wheel carrier is supported axially undisplaceably in a frame, and that the other one is supported in an axially movable manner while the rotating drive means make driving contact with the axially undisplaceable thrust ring.

The invention further relates to an embodiment of the device which is suitable for displacing tubes or rods of considerably varying outside diameter with one and the same device without cumbersome alterations and adjustments in a manner such as is still to be described.

The invention will now be explained further with reference to two exemplary embodiments shown in the drawings.

Figure 1 shows a side view of the device, partially in section, in a first embodiment.

Figure 2 shows a plan view of the device.

Figure 3 shows one of the planetary wheel carriers thereof.

Figure 4 shows cross section IV-IV of Figure 3.

Figure 5 shows a side view, partially in section of a second embodiment of the invention.

Figure 6 shows a partial side view thereof, seen from the right in Figure 5.

Figure 7 shows a section perpendicular to the axis of a component thereof.

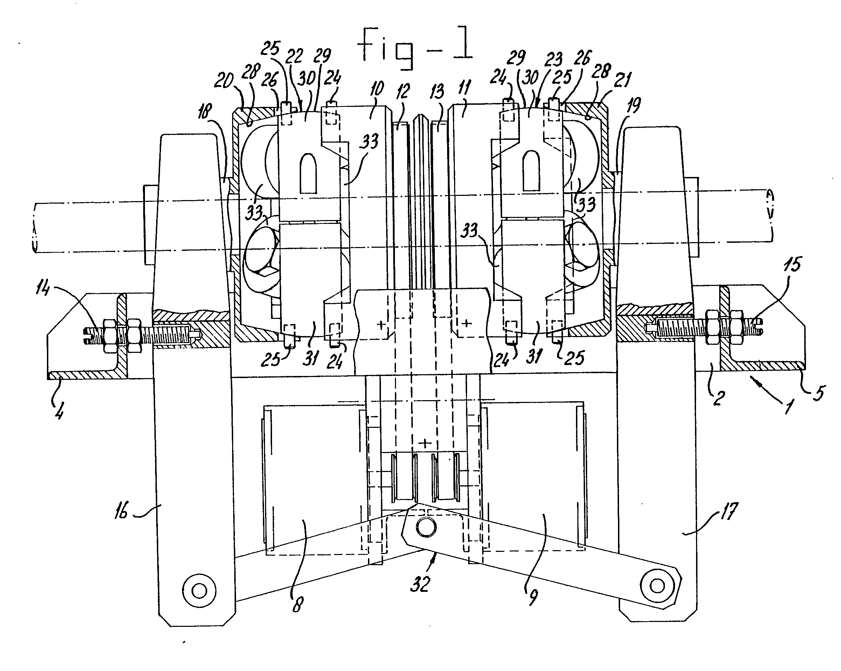

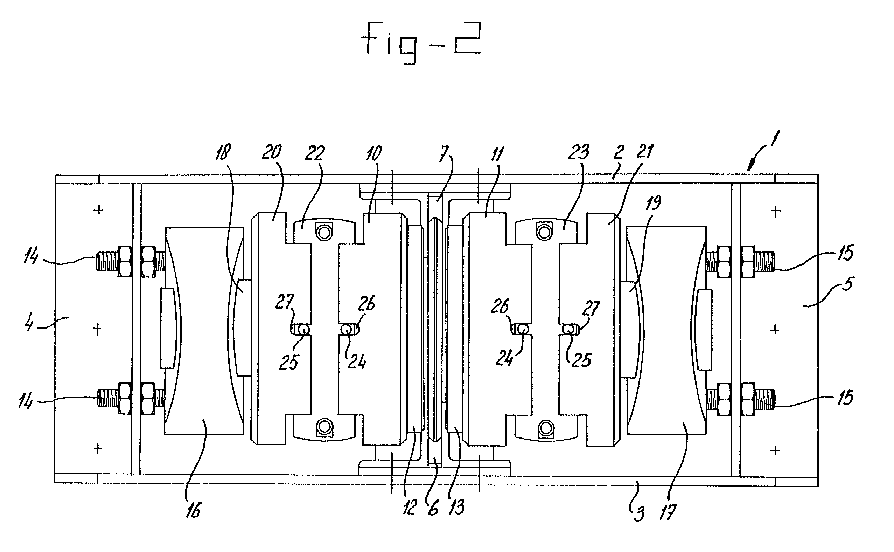

The device shown in Figures 1 and 2 has a frame 1 comprising two longitudinal girders 2, 3 and two cross girders 4, 5. In the centre between the cross girders 4, 5, the frame 1 is provided with supports 6, 7 with which on the one hand the motors 8, 9 and, on the other hand, the thrust rings 10, 11, which are fixed in the axial direction, are suspended. Said thrust rings 10, 11 are driven by the toothed belts 12, 13. Two levers 16, 17 are suspended so as to be able to swing on the frame 1 by means of adjustable pivot bolts 14, 15. The axially movable thrust rings 20, 21 are rotatably supported with thrust bearings 18, 19. A planetary wheel holder 22, 23 is situated in each case between two pairs of thrust rings 10, 20 and 11, 21 respectively. The pins 24, 25 provided on the planetary holders 22, 23 and the slots 26, 27 provided in the thrust rings ensure that thrust rings 10, 11, 20, 21 and planetary wheel holders 22, 23 rotate as a whole.

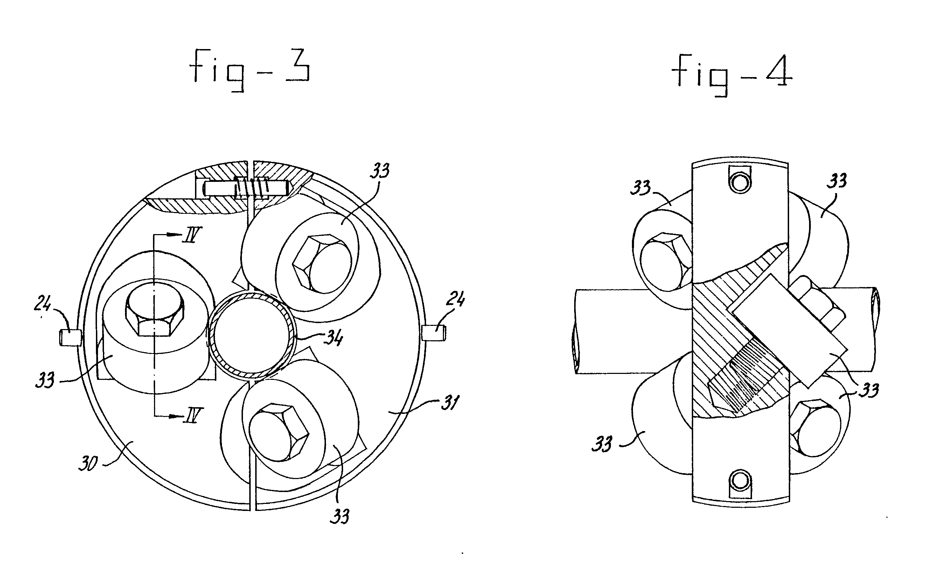

On the inside, the thrust rings 10, 11, 20, 21 are provided with conical faces 28 which interact with external conical faces 29 on the half rings 30, 31 of which the planetary wheel holders 22, 23 are composed. The connecting toggle links 32 at the end of the levers 16, 17 facing away from the thrust bearings 18, 19 are continuously forced into the spread position by means of a spring (not shown) so that the thrust rings 10, 11 and 20, 21 respectively of each pair are continuously forced towards each other. As a consequence of the conical faces 28, 29 interacting with each other, the half rings 30, 31 are consequently continuously forced towards each other, against the action of springs (Fig. 3) urging these half rings apart.

The half rings 30, 31 of the planetary wheel holders 22, 23 are provided internally with freely rotatable rollers (planetary wheels) 33, three in half ring 30 and three in half ring 31. All this can readily be seen in Figure 3. If a tube is introduced into the opening 34 bounded by the rollers 33, the rollers are pressed onto the surface of the tube by means of the connecting links 32, the levers 16, 17 and the interacting conical faces 28, 29.

As shown in Figure 4, the centre line of each roller makes an angle of 45° with that of the planetary wheel holder. Furthermore, as shown in Figure 1, the rollers of both planetary wheel holders are directed oppositely to each other.

If both planetary wheel holders 22, 23 are now driven in the same direction at the same speed by the motors 8, 9 (via toothed belts 12, 13, thrust rings 10, 11, pins 24 and slots 26) the tube rotates accordingly. The pressing of the rollers 33 against the tube wall at the same time prevents the occurrence of slip.

If the two planetary wheel holders 22, 23 are driven in the opposite direction at the same speed, the tube is displaced axially without rotating.

By combining these movements of the planetary wheel holders, the tube can furthermore be rotated and axially displaced in any desired manner.

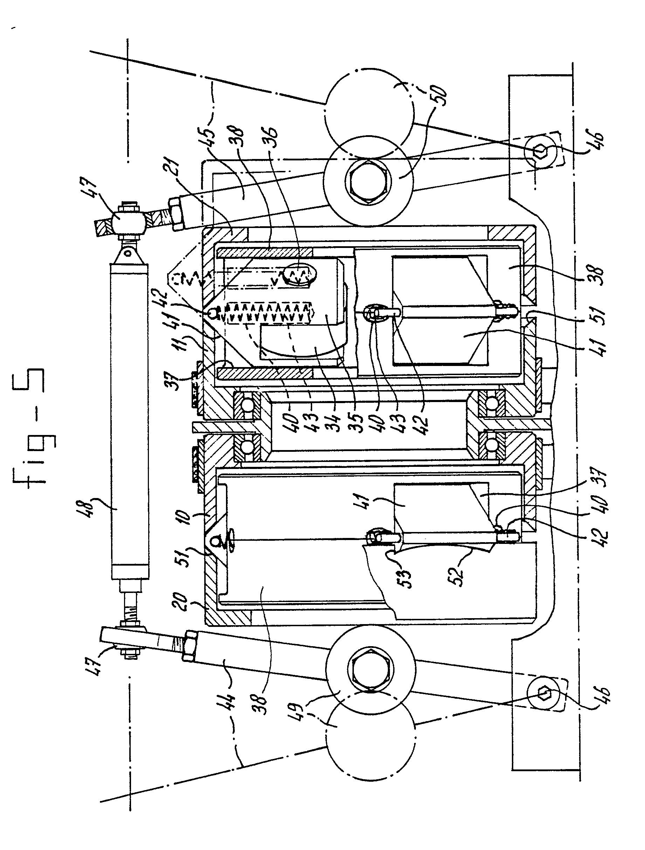

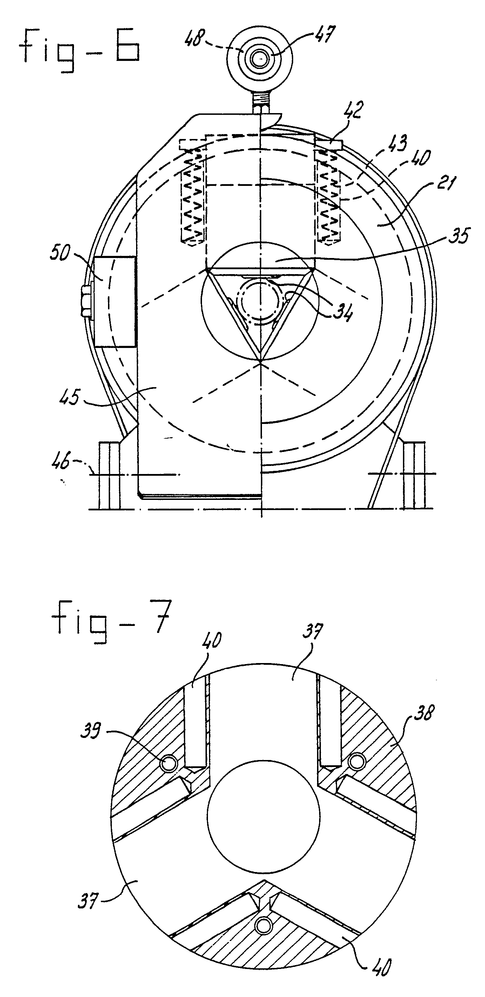

In Figures 5, 6 and 7, the drive motors have not been shown. The planetary wheels (rollers) 34 are in this case each accomodated in a thrust piece 35 which is obliquely forked (top right in Figure 5) and accomodates such a roller 34 on an oblique journal 36. Each thrust piece 35 has a rectangular or square cross section and is accomodated in a radially slidable manner in a rectangular or square casing 37 of a thrust piece holder 38 drawn in section perpendicular to the axis in Figure 7. Although the material section of Figure 7 is hatched, the thrust piece holder 38 material section of Figure 7 is hatched, the thrust piece holder 38 may be composed of two parts permanently joined to each other by bolts in screw holes 39.

Each of the two thrust piece holders 38 has three such casings 37 at 120°, each for a thrust piece 35 with roller 34, and in the centre next to each casing 37 there is on either side a drilled hole 40.

Each thrust piece 35 has, on the outside, two flat boundary surfaces 41, and provided in the radially outer part of the thrust piece between said faces there are pins 42, protruding to both sides therefrom and resting near each end on a compression spring 43 provided in such a drilled hole 40 of the thrust piece holder 38. Fig. 6 shows these pins and these springs for the top thrust piece 35.

Here again, two axially non-displaceable thrust rings 10, 11 are provided next to each other and an axially displaceable thrust ring 20, 21 is provided opposite each of them. The rings 20, 21 are altered in axial position with respect to the rings 10 and 11 by levers 44, 45 which, unlike the levers 16, 17, are connected in a pivoting manner to the frame at 46 and via a ball joint are each connected in a pivoting manner at 47 to one of the mutually movable parts of a floating pneumatic cylinder 48, while thrust rollers 49 and 50 on either side of, and on, each lever press against the adjacent ring 20 or 21.

The rings 10, 11, 20, 21 have, in their cylindrical circumferential part, an oblique edge 51 and a part of the flat faces 41 of each thrust piece 35 fits at the radial outside against a flat part of said edges 51. This means that the outer periphery of each ring 10, 11, 20, 21 has a parabolic intersecting line with each flat part of edge 51, indicated as 52 in the left bottom part of Fig. 5, showing the outside of thrust ring 20. This flat part terminates in flat end edges 53, parallel to the axis of the device, of which only one is seen in Fig. 5 as the other one is covered by the adjacent top part of thrust piece 35 protruding from thrust ring 20. The thrust pieces 35 each fit with their end planes between two such opposite edges 53 slidingly so as to be always rotating with these rings without the possibility of differences in radial positions of the thrust pieces and the axial distances between the rings 10 and 20 and between the rings 11 and 21.

On extending cylinder 48, the springs 43 are able to force the thrust pieces 35 radially outwards, in which process the latter force the rings 10 and 20, on the one hand, and 11 and 21, on the other hand, axially apart so that the axially movable rings 20, 21 follow the rollers 49 and 50 in the axial position. The thrust pieces 35 are at the same time displaced axially over half the distance over which the rings 20, 21 are displaced. On the right in Figure 5, the end position other than that drawn with full lines is shown by broken lines for the respective parts.

The other parts of this device are not essentially different from those in Figures 1 - 4 as regards drive and construction. The great difference is that, in the device of Figures 5 - 7, tubes of considerably diverse diameter can be gripped because the planetary wheels 34 are able to move radially over a considerable distance. Extending cylinder 48 moves said rollers outwards. After a tube or rod to be moved is introduced into the central through opening of the device, the cylinder 48 is shortened until the rollers 34 make contact with said tube or rod, regardless of how large its diameter is.

In both exemplary embodiments, the axial contact force, exerted by the levers 16, 17 and 44, 45 on the outermost thrust rings 20, 21 and transmitted via the planetary wheel holders to the innermost thrust rings 10, 11, will distribute itself evenly over both levers.

## Claims

1. Device for the rotating and/or axially moving displacement of tubes or rods during the performance of processes thereon, characterized in that two planetary systems are provided next to each other on the same axis in a manner such that they can both simultaneously make contact with the circumference of a tube or rod to be processed with its axis in said axis, in that both systems have planetary wheels rotating around their axis constructed as friction rollers for making frictional contact with the circumference of the tube or rod, the axes of the planetary wheels of the one system sloping in one direction and those of the other system sloping in the opposite direction with respect to a plane perpendicular to said common axis, each system having drive means for rotation around the common axis and the drive means of at least one system being so constructed that they can, if desired, hold the system stationary or can rotate it with variable speed even in the opposite direction from that of the other system.

2. Device according to Claim 1, characterized in that each system of planetary wheels has at least three planetary wheels.

3. Device according to Claim 1 or Claim 2, in which the planetary wheels are accommodated in separate carriers which are rotatable around the axis and which are each enclosed between two opposite thrust rings which can be moved towards each other and can make contact non-rotatably with each other and with the carrier situated between them, one of which thrust rings is connected to the rotational drive means.

4. Device according to Claim 3, in which the planetary wheel carriers are externally provided with faces extending conically as mirror images with respect to the centre plane perpendicular to the axis and interacting with internally matching conically extending faces on the thrust rings.

5. Device according to Claim 4, in which said conical faces with small conical apex angle are able to combine the interacting thrust rings and the planetary wheel carrier between them frictionally to form a rigid rotatable structure.

6. Device according to Claim 3, 4 or 5, in which in each case one of the thrust rings for a planetary wheel carrier is supported axially undisplaceably in a frame, and the other one is supported in an axially movable manner, while the rotating drive means make driving contact with the axially undisplaceable thrust ring to drive it.

7. Device according to Claim 6, in which a lever is axially forced against each axially displaceable thrust ring, which levers are supported pivotally in the frame and, on the other hand, are connected to means for forcing their thrust ring, if desired, towards the associated, axially immovable thrust ring or for releasing their thrust ring in order to allow it to move away axially from said immovable thrust ring.

8. Device according to Claim 7, in which the levers are mutually connected by a connecting link device which is constantly forced into the spread position and to which a release means acting in the opposite direction is connected.

9. Device according to Claim 7, in which the levers are mutually connected by a floating linear actuator such as a pneumatic cylinder, with one part, such as the cylinder, pivotally connected to the one lever and the other part, such as the piston rod thereof, pivotally connected to the other lever.

10. Device according to Claim 1 or Claim 2, in which each system of planetary wheels comprises a wheel holder ring divided into two half rings in a plane through the ring centre line, and also means for resiliently forcing the two half rings towards each other.

11. Device according to Claim 10, in which each half ring is provided with three rollers which are fitted so as to be regularly distributed in the circumferential direction and which are alternately situated on either side of the ring centre plane perpendicular to the ring centre line.

12. Device according to any of Claims 3 to 9 inclusive, in which each planetary wheel carrier and its thrust rings have projections and recesses engaging each other in order to cause these parts to rotate as a whole despite mutual axial displacements.

13. Device according to any of Claims 3 to 9 inclusive or 12, in which each planetary wheel carrier comprises an annular thrust piece holder, in casings whereof thrust pieces, each carrying a planetary wheel, are radially slidable, springs resting on said thrust piece holders forcing each thrust piece radially outwards against the outside edge of the thrust rings.

14. Device according to claim 13, in which the thrust rings and the outer parts of the thrust pieces have cooperating flat faces, extending in a direction perpendicular to the axis of the thrust rings and inclined with respect to said axis, giving contacting over a surface area between thrust rings and thrust pieces independent of the radial positions of the thrust pieces.

15. Device according to claim 14, in which each flat face in a thrust ring is bordered by edges protruding therefrom at both ends towards the opposite thrust ring, the thrust piece having end surfaces at both circumferential sides cooperating with these edges so that each thrust piece can slide radially and axially between these edges but is slidingly locked in circumferential direction of the thrust rings to these rings in order to always maintain the same circumferential position as the two thrust rings, between which it is positioned.

Fig-1

EP 0 338 643 A1

Fig-2

EP 0 338 643 A1

Fig-4

Fig-3

# Fig-5

EP 0 338 643 A1

Fig-6

Fig-7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| A,D | BE-A-694491 (FIBORA AG.) <br> * the whole document * | 1-3 | F16H19/00 <br> B23Q7/05 <br> B23K37/04 |
| A,D | EP-A-1007 (J. RASMUSSEN ET AL.) <br> * the whole document * | 1, 2, 10 | |

TECHNICAL FIELDS SEARCHED (Int. Cl.4 )

B23K
B23Q
F16H

The present search report has been drawn up for all claims

| Place of search | Date of completion of the search | Examiner |
|---|---|---|
| THE HAGUE | 19 JULY 1989 | ARAN D.D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)